# FASCICULE DE BREVET EUROPEEN

(11) **EP 3 308 026 B1**
(45) Date de publication et mention de la délivrance du brevet: **07.10.2020**
(21) Numéro de dépôt: 16734436.5
(22) Date de dépôt: 09.06.2016
(51) Int. Cl.: F04C 15/00, F16J 15/00, F04B 1/04, F01B 1/06

(54) **SYSTEME HYDRAULIQUE A CHAMBRE DRAINEE**
HYDRAULIKSYSTEM MIT ENTWÄSSERTER KAMMER
DRAINED-CHAMBER HYDRAULIC SYSTEM

(30) Priorité: 12.06.2015 FR 1555358
(43) Date de publication de la demande: 18.04.2018
(73) Titulaire: Poclain Hydraulics Industrie, 60410 Verberie (FR)
(72) Inventeur: VIDAL, Stéphane, 60410 Verberie (FR); MULOT, Jérémie, 60410 Verberie (FR); DEPIERRE, Géry, 60410 Verberie (FR)
(74) Mandataire: Cabinet Beau de Loménie
(86) Numéro de dépôt international: PCT/FR2016/051385
(87) Numéro de publication internationale: WO 2016/198793

(56) Documents cités:
- EP-A1- 0 342 751
- WO-A1-83/02482
- DE-A1- 1 528 416
- DE-A1- 2 321 625
- DE-A1- 4 204 184
- FR-A1- 2 967 228
- GB-A- 809 897
- US-A- 2 481 754
- US-A- 3 133 506
- US-A- 3 943 717
- US-A- 5 769 611
- US-A1- 2002 046 649

## Description

La présente invention concerne un système hydraulique comprenant un carter dans lequel est disposé un appareil hydraulique tel qu'un moteur hydraulique à pistons rétractables, des conduites principales pour l'alimentation et l'échappement de l'appareil hydraulique, un arbre engagé dans le carter, et un dispositif d'étanchéité entre l'arbre et le carter, le dispositif d'étanchéité comprenant un premier et un deuxième élément d'étanchéité successivement disposés sur l'arbre en ménageant entre eux une chambre intermédiaire.

Par exemple, l'appareil hydraulique peut comprendre un bloc-cylindres, une came et un distributeur, de telle sorte que, considéré avec le carter, il forme un moteur hydraulique. Pour la désactivation de ce moteur hydraulique, les pistons montés coulissants dans les cylindres du bloc-cylindres peuvent être rétractés dans ce dernier pour cesser d'être en contact avec la came, opérant ainsi ce que l'on nomme un décrabotage du moteur permettant de passer le moteur hydraulique en configuration de roue libre que l'on peut également qualifier de configuration désactivée. On qualifie communément de tels moteurs hydrauliques de moteurs hydrauliques à pistons rétractables. Ce décrabotage peut être aidé ou provoqué par la mise en pression de l'espace intérieur du carter. Cependant, lorsqu'on souhaite réactiver le moteur, et donc faire ressortir les pistons de leurs cylindres pour les remettre en contact avec la came, opérant ainsi ce que l'on nomme un crabotage du moteur ou une mise en cylindrée du moteur, la pression dans l'espace intérieur peut augmenter brutalement du fait de la sortie des pistons, provoquant ainsi un pic de pression.

On connaît un système de ce type par la demande de brevet français FR 2 967 228 au nom de la Demanderesse. Comme indiqué dans FR 2 967 228, la présence du premier élément d'étanchéité permet de protéger le deuxième élément d'étanchéité contre les pics de pression pouvant survenir dans l'espace intérieur du carter. La chambre intermédiaire sert d'espace tampon, en particulier pour recueillir le fluide provenant de fuites au niveau du premier élément d'étanchéité, ces fuites survenant à l'occasion de tels pics de pression. Le premier élément d'étanchéité est composé d'un anneau rigide et d'une pièce de poussée et d'étanchéité souple. Ainsi, le premier élément d'étanchéité ne peut pas fléchir sous la pression, mais peut suinter légèrement, tandis que le deuxième élément d'étanchéité est un joint souple désigné comme bague à lèvre dans le commerce, qui permet une étanchéité parfaite sur un arbre tournant, mais qui pourrait fléchir sous la pression. Selon FR 2 967 228, la chambre intermédiaire est reliée à un drain, ce qui permet d'éviter les élévations de pression dans cette chambre et d'améliorer ainsi encore la protection du deuxième élément d'étanchéité. L'assemblage de ces deux joints pour réaliser l'étanchéité de la liaison entre un arbre tournant et un carter d'un appareil hydraulique, combinée avec un drainage de la chambre intermédiaire permet d'avoir une étanchéité parfaite tout au long de l'utilisation de l'appareil hydraulique, même si la pression dans le carter devient élevée ou si des pics de pression de carter se produisent.

De même, la demande de brevet français FR 3 014 940 concerne un système du même type dans lequel la chambre intermédiaire est reliée à l'espace intérieur du carter par l'intermédiaire d'un gicleur calibré, de manière à organiser une fuite entre l'espace intérieur du carter et la chambre de décharge, avec une perte de charge donnée entre ces deux enceintes.

Dans les systèmes connus, par exemple par les deux documents précités, la chambre intermédiaire est reliée à une conduite de drain, qui est une conduite spécifique, usinée dans l'arbre. Ainsi, cette conduite nécessite un usinage particulier de l'arbre et, au cas où d'autres conduites sont également usinées dans l'arbre (par exemple les conduites principales pour l'alimentation et l'échappement de l'appareil hydraulique, ou bien une conduite servant à l'amenée du fluide de décrabotage et à l'évacuation de ce fluide), l'arbre doit être dimensionné, tant sur le plan de l'encombrement que sur celui de sa résistance mécanique, de manière à pouvoir accueillir la ou les conduites qui doivent y être usinées.

L'invention vise à améliorer cet état de la technique, en évitant d'avoir recours à une conduite de drain spécifique.

Ce but est atteint grâce au fait que le système hydraulique présente une liaison entre la chambre intermédiaire et l'une des conduites principales, cette liaison étant équipée d'un clapet antiretour autorisant seulement la circulation de fluide dans le sens allant de la chambre intermédiaire vers ladite une des conduites principales.

Ainsi, selon l'invention, on met à profit la présence des conduites principales, pour que l'une d'entre elles soit utilisée comme conduite de drainage, en étant relié à la chambre intermédiaire par l'intermédiaire de la liaison équipée d'un clapet antiretour.

Le dispositif d'étanchéité du système hydraulique étant situé entre l'arbre et le carter, les risques de surpression dans la chambre intermédiaire se produisent, en particulier via une fuite dans le premier élément d'étanchéité, lorsque la pression dans le carter est élevée. Dans le cas où l'appareil hydraulique est de type à pistons décrabotables, ces risques de surpression se produisent au moment du recrabotage des pistons, lorsqu'on fait sortir les pistons de leurs cylindres, pour les mettre au contact de la came. Or, à ce moment, les conduites principales ne sont pas encore utilisées pour faire fonctionner l'appareil hydraulique, précisément parce que ces pistons ne sont pas encore dans leurs positions crabotées. En d'autres termes, dans cette situation, la pression dans les conduites principales est maintenue à une valeur basse. Ainsi, si la pression dans la chambre intermédiaire devient élevée, l'excès de fluide se déverse naturellement vers la conduite principale à laquelle est reliée la chambre intermédiaire, dans le sens de circulation autorisé par le clapet antiretour. A l'inverse, lorsque l'appareil hydraulique est en fonctionnement, les conduites principales sont mises à une pression permettant ce fonctionnement. Ainsi, si la pression dans la conduite principale à laquelle est reliée la chambre intermédiaire est supérieure à la pression maximale cible dans cette chambre (ce qui est nécessairement le cas lorsque la conduite principale en question est la conduite d'alimentation), le fluide ne circule pas de cette conduite vers la chambre intermédiaire. En revanche, si la pression de la conduite principale à laquelle est reliée la chambre intermédiaire est inférieure à la pression maximale cible dans cette chambre, le fluide peut s'écouler de la chambre intermédiaire vers la conduite principale en question. Cette situation est plutôt théorique puisque, pour éviter les phénomènes de cavitation, la pression dans la conduite principale à la plus basse pression est au moins égale à une pression de gavage qui est en général assez nettement supérieure à la pression atmosphérique. Il est donc aisé, par une conception appropriée du clapet antiretour, d'éviter une alimentation de la chambre intermédiaire à partir de la conduite principale à laquelle cette chambre est reliée même lorsque cette conduite principale est à la basse pression de fonctionnement de l'appareil hydraulique.

Ainsi, grâce à l'invention, on réalise un drainage efficace de la chambre intermédiaire, sans nécessiter une conduite de drain spécifique.

De préférence, le clapet antiretour forme une restriction, générant une perte de charge entre la chambre intermédiaire et ladite une des conduites principales.

Par exemple, la section de passage de ladite restriction est de l'ordre de 1 mm².

Optionnellement, ladite au moins une des conduites principales, ou chacune des deux conduites principales, comprend un tronçon qui passe dans l'arbre, et la liaison comprend un perçage de l'arbre qui s'étend entre la chambre intermédiaire et ledit tronçon.

Le perçage formant la liaison peut être de petite dimension (faible longueur et faible section de passage) et, en général, il est incliné par rapport au tronçon de la ou des conduites principales qui passent dans l'arbre. En particulier, le perçage de l'arbre peut être orienté radialement. Ainsi, ce perçage n'affecte ni le dimensionnement, ni la résistance mécanique de l'arbre. Il est par ailleurs très simple à usiner.

Optionnellement, le clapet antiretour est disposé dans le perçage de l'arbre.

Optionnellement, le système hydraulique comporte une bague de frottement montée serrée sur l'arbre et présentant une piste externe avec laquelle coopère au moins l'un des éléments d'étanchéité, et la liaison comprend un perçage de la bague de frottement.

La piste externe de la bague de frottement forme une surface d'étanchéité appropriée pour le ou les éléments d'étanchéité avec lesquels elle coopère. Il est également possible que la bague de frottement forme également une bague de support pour un palier de support de la rotation relative entre l'arbre et le carter.

Cependant, dans un autre mode de réalisation, une telle bague de frottement n'est pas prévue et les deux éléments d'étanchéité coopèrent directement avec l'arbre, dont la surface forme une surface d'étanchéité.

Optionnellement, le clapet antiretour est disposé dans le perçage de la bague de frottement lorsqu'elle est présente.

Optionnellement, ladite une des conduites principales est la conduite d'échappement de l'appareil hydraulique dans le sens préférentiel de fonctionnement dudit appareil.

Ainsi, en situation de fonctionnement, les pistons étant crabottés, le clapet antiretour est soumis à la pression d'échappement, qui est de l'ordre de la pression de gavage, ce qui augmente sa durée de vie par rapport à une situation dans laquelle il serait en général soumis à la pression d'alimentation.

On peut choisir que le clapet antiretour soit un clapet simple, sans pression de tarage, auquel cas il s'ouvre pour permettre la circulation de fluide depuis la chambre intermédiaire vers la conduite principale à laquelle cette chambre est reliée par la liaison précitée, dès lors que la pression dans ladite chambre est supérieure à la pression dans ladite conduite principale. Cependant, optionnellement, le clapet antiretour est un clapet taré à une pression de tarage qui est avantageusement de l'ordre de 3 bar.

Cette pression de tarage signifie que le clapet autorise la circulation de fluide depuis la chambre intermédiaire jusqu'à la conduite principale à laquelle cette chambre est reliée lorsque la pression dans ladite chambre excède la pression dans ladite conduite principale d'une valeur au moins égale à la pression de tarage. Un tarage de l'ordre de 3 bar permet d'utiliser un clapet antiretour de fabrication simple et peu coûteuse.

Optionnellement, l'appareil hydraulique comprend un bloc-cylindres, une came et un distributeur de fluide.

Optionnellement, le système hydraulique est un système d'entrainement d'une roue d'un véhicule, et l'arbre forme la fusée de la roue.

Optionnellement, l'arbre présente seulement trois tronçons axiaux de conduite de fluide, à savoir deux tronçons principaux formant respectivement au moins une partie de la conduite principale d'alimentation et au moins une partie de la conduite principale d'échappement, et un tronçon auxiliaire pour alimenter l'espace intérieur du carter en fluide sous pression.

En particulier, dans le cas où l'appareil hydraulique comprend des pistons décrabotables, son tronçon auxiliaire sert à mettre l'espace intérieur du carter en pression pour favoriser le décrabotage des pistons. Selon l'invention, le drainage de la chambre intermédiaire est réalisé par l'une des conduites principales, à laquelle est reliée cette chambre via un clapet antiretour.

L'invention telle que proposée concerne également un procédé de pilotage d'alimentation en fluide d'un moteur hydraulique tel que défini précédemment, ledit moteur hydraulique étant relié à deux conduites principales, et le volume interne du carter étant relié à une conduite auxiliaire, le moteur hydraulique comprenant une pluralité de pistons disposés dans des cylindres d'un bloc cylindres et adaptés pour sélectivement venir au contact d'une came, ledit procédé pilotant l'alimentation en fluide de manière à ce que
- dans une configuration activée, les conduites principales forment l'alimentation et l'échappement en fluide du moteur hydraulique, et la conduite auxiliaire forme un drain de fluide du volume interne du carter,
- dans une configuration désactivée, la conduite auxiliaire est alimentée en fluide de manière à appliquer une pression au sein du volume interne du carter de manière à maintenir les pistons en position rétractée dans les cylindres, et les deux conduites principales sont à pression ambiante, l'une desdites conduites principales formant un drain du volume interne du carter.

L'invention sera bien comprise et ses avantages apparaîtront mieux à la lecture de la description détaillée qui suit, d'un mode de réalisation représenté à titre d'exemple non limitatif. La description se réfère aux dessins annexés, sur lesquels :
- la figure 1 est une vue en coupe axiale d'un système hydraulique selon l'invention en situation de fonctionnement de l'appareil, les pistons étant en contact avec la came ;
- la figure 2 est une vue analogue à la figure 1, montrant la situation dans laquelle les pistons sont rétractés dans les cylindres; et
- la figure 3 est une vue analogue à la figure 1, montrant une variante de réalisation.

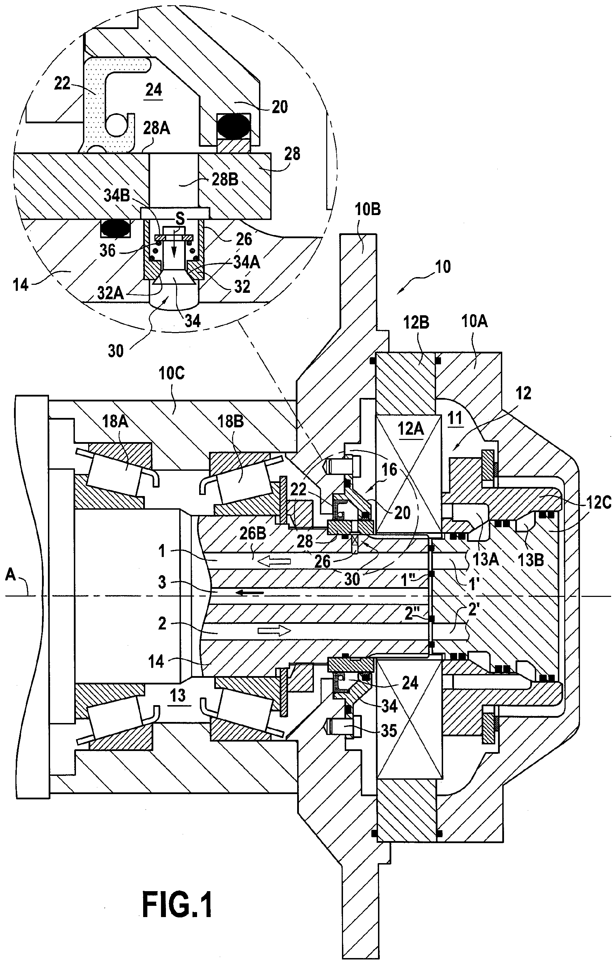

La figure 1 montre un système hydraulique comprenant un carter 10 dans lequel est disposé un appareil hydraulique 12, un arbre 14 engagé dans le carter et un dispositif d'étanchéité 16 entre l'arbre et le carter. L'arbre 14 et le carter 10 sont montés mobiles en rotation l'un par rapport à l'autre. En l'occurrence, l'appareil hydraulique 12 comprend un bloc-cylindres 12A, une came 12B et un distributeur de fluide 12C. La came 12B peut être une came multilobes. Il s'agit donc, avec le carter, d'un moteur hydraulique ou d'une pompe. Cet appareil peut être en particulier un moteur hydraulique à pistons radiaux ou à pistons axiaux. De manière connue en soi, les cylindres du bloc-cylindres sont alimentés en fluide à partir d'un fluide distribué par le distributeur, via des gorges, dont certaines sont représentées et désignées par les références 13A et 13B. Le distributeur est lui-même relié à des conduites principales 1 et 2, respectivement pour l'alimentation et l'échappement de l'appareil hydraulique. En l'espèce, l'appareil hydraulique peut être du type à bloc-cylindres fixe et à carter tournant, et les conduites d'alimentation et d'échappement 1 et 2 passent par l'arbre 14, dans lequel elles sont orientées axialement, c'est-à-dire parallèlement à l'axe A de rotation du bloc-cylindres, axe selon lequel l'arbre 14 est orienté.

Le distributeur comprend des conduits de distribution 1' et 2', qui sont seulement amorcés sur les figures, et qui, d'une part, débouchent sur la face radiale du distributeur tournée vers l'arbre 14, de manière à être en regard avec les extrémités des conduites 1 et 2 situées à cette extrémité de l'arbre et qui, d'autre part, sont reliés aux gorges de distribution telles que les gorges 13A et 13B. La communication entre les conduites principales 1 et 2 et les conduits de distribution 1' et 2' est étanchée vis-à-vis du reste du système par tout moyen d'étanchéité approprié, par exemple par des joints annulaires 1" et 2" disposés entre les faces en regard du distributeur et de l'arbre.

En l'espèce, une autre conduite 3 est percée axialement dans l'arbre. Il s'agit d'une conduite d'amenée de fluide, qui sert à amener le fluide vers l'espace intérieur 11 du carter, en particulier pour mettre cet espace en pression de manière à favoriser le décrabotage des pistons de l'appareil hydraulique, et pour évacuer ce fluide lors du recrabotage des pistons.

Plus précisément, la conduite 3 permet de réaliser une amenée de fluide dans l'espace intérieur 11 du carter de manière à y entraîner une montée en pression entraînant une rétractation des pistons dans les cylindres du bloc-cylindres de sorte que les pistons ne soient plus en contact avec la came, opérant ainsi ce que l'on nomme un décrabotage du moteur et permettant de mettre le moteur en configuration de roue libre. A l'inverse, le fait de ramener les pistons au contact de la came est nommé un crabotage ou une mise en cylindrée du moteur. Le fluide amené par la conduite 3 parvient entre les faces en regard du distributeur 12C et de l'arbre 14 et circule vers l'espace intérieur 11 du carter, par exemple par une liaison dédiée, ou bien par un jeu ménagé sur une partie, des cannelures entre l'arbre 14 et le bloc-cylindres 12A.

On voit ainsi que l'arbre présente seulement trois tronçons axiaux de conduite de fluide, à savoir deux tronçons principaux qui forment tout ou partie des conduites principales d'alimentation et d'échappement 1 et 2 et un tronçon auxiliaire qui forme tout ou partie de la conduite 3 de mise en pression du carter. Ce tronçon auxiliaire forme typiquement une conduite de drain du volume interne du carter lorsque le moteur hydraulique est en fonctionnement.

La came 12B forme une partie du carter 10, qui comprend également une partie 10A située autour du distributeur 12C, et une partie 10B formant par exemple une bride pour la connexion avec un organe entraîné par le moteur, par exemple le moyeu d'une roue. Du côté opposé à l'appareil hydraulique 12, le carter est prolongé par une partie 10C, qui peut par exemple être engagée dans le moyeu d'une roue. Le carter 10 et l'arbre 14 sont montés en rotation relative. Pour cette raison, ils coopèrent l'un avec l'autre via des paliers 18A et 18B, logés en l'espèce dans la partie 10C du carter. De manière connue, ces paliers peuvent être des paliers à roulements coniques. Le système peut servir à l'entraînement d'une roue d'un véhicule, auquel cas l'arbre peut être la fusée d'une roue.

D'une manière connue en soi, les paliers 18a et 18b sont garnis de graisse. Ces paliers peuvent être associés à des moyens de fermeture dénommés joints cassette, non représentés, qui sont destinés à maintenir physiquement la graisse dans les paliers au moment des opérations de montage, ou à garantir la propreté des paliers pendant leur transport. De tels joints cassette sont souvent incorporés aux paliers lorsqu'ils sont livrés déjà garnis de graisse. Lesdits paliers sont alors désignés comme « roulements étanches ». Ces joints sont souvent placés entre les bagues interne et externe des paliers, qui constituent les pistes des roulements. Parfois ces joints sont constitués d'une simple rondelle de métal ajustée. Parfois, ils comprennent une partie en caoutchouc exerçant une légère pression de contact sur la pièce tournante et d'une manière habituelle, ont leur piste de frottement constituée par une des bagues du palier. Cependant ces joints casettes sont considérés comme des protecteurs de poussière ou des moyens de maintenir la graisse dans le roulement, et ne peuvent être considérés comme des joints étanches au fluide hydraulique ou à la pression.

L'arbre 14 est solidaire en rotation avec le bloc-cylindres 12A, via des cannelures, de manière connue en soi. Ainsi, l'arbre et le bloc-cylindres sont en l'espèce deux éléments de stator, tandis que le carter est un élément de rotor.

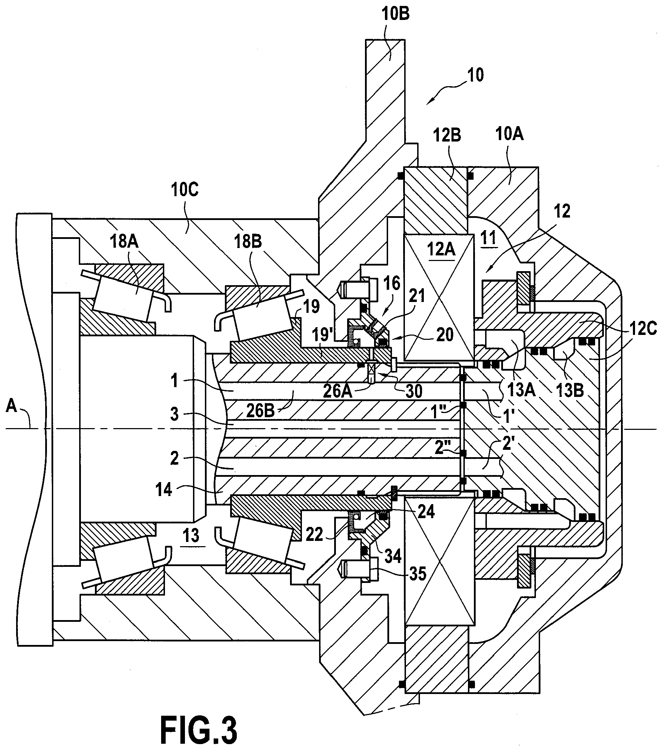

Comme on le voit mieux dans la partie agrandie de la figure 1, le dispositif d'étanchéité 16 comprend un premier élément d'étanchéité 20 et un deuxième élément d'étanchéité 22 successivement disposés sur l'arbre 14, une chambre intermédiaire 24 étant ménagée entre eux. Le premier élément d'étanchéité 20 est plus proche de l'appareil hydraulique 12 que le deuxième. La chambre intermédiaire 24 est drainée pour éviter les surpressions dans cette chambre. Elle peut en effet être alimentée en fluide par des fuites pouvant survenir au niveau du premier élément d'étanchéité 20, lorsque la pression dans l'espace intérieur du carter 11 est élevée. En effet, l'étanchéité assurée par le premier élément d'étanchéité 20 peut être volontairement moindre que celle qu'assure le deuxième élément d'étanchéité 22. De plus, comme on le voit dans la variante de la figure 3, le premier élément d'étanchéité 20 peut être pourvu d'un gicleur calibré 21 permettant un balayage de l'espace intérieur du carter, comme indiqué dans la demande de brevet français n° 1362756.

L'étanchéité vis-à-vis du fluide hydraulique sous pression présent dans le carter moteur 12 est assurée par le dispositif d'étanchéité 16. Entre le dispositif d'étanchéité 16 et les paliers 18a et 18b doit se trouver un volume d'air qui a été emprisonné au montage, entre ces paliers et le ou les joints cassette évoqués ci-dessus. Au long de la vie de la machine ou de l'engin incluant le système hydraulique suivant l'invention, le fluide hydraulique ne doit pas s'écouler au-delà du dispositif d'étanchéité 16, en direction des paliers. Si un tel écoulement se produit, cela signifie que la machine est détruite, ou mal assemblée. En d'autres termes, il n'y a aucun passage du fluide hydraulique depuis le carter 12 vers les paliers 18a et 18b.

Le système présente une liaison entre la chambre intermédiaire 24 et la conduite principale 1. En l'espèce, cette liaison comprend un perçage 26 de l'arbre 14, ce perçage étant orienté radialement et s'étendant entre la chambre intermédiaire 24 et la conduite principale 1.

En l'espèce, le système comporte une bague de frottement 28 qui est montée serrée sur l'arbre 14 et qui présente une piste externe avec laquelle coopèrent les éléments d'étanchéité 20 et 22. Ainsi, une partie de cette piste externe 28A délimite la chambre intermédiaire 24 du côté de l'arbre. Cette bague présente un perçage 28B qui communique avec le perçage 26 de l'arbre 14. La liaison entre la chambre intermédiaire 24 et la conduite 1 comprend donc en l'espèce le perçage 28B et le perçage 26.

Il convient toutefois de relever que la bague de frottement n'est présente que selon une variante de réalisation. En effet, si la surface cylindrique de l'arbre est de qualité suffisante, cette surface assure elle-même directement la fonction de piste de frottement.

Cette liaison est équipée d'un clapet antiretour 30 qui autorise seulement la circulation de fluide dans le sens S allant de la chambre intermédiaire 24 vers la conduite principale 1. Le clapet antiretour 30 comprend une chemise 32 qui présente une surface de siège 32A tournée vers l'arbre, et une tige de clapet 34 mobile dans la chemise. Cette tige comprend une tête d'étanchéité 34A coopérant avec la surface de siège, et une tête de pression 34B, par exemple formée par un circlips, située à l'opposé de la tête 34A et dont une surface, tournée vers la chambre intermédiaire 24, reçoit la pression de fluide dans cette chambre. Un ressort de rappel 36 est disposé entre une surface de butée de la chemise 32 et une surface de butée de la tige opposée à la chambre 24, par exemple formée par un épaulement de la tête de pression 34B opposé à la chambre 24. En l'espèce, le clapet antiretour 30 est disposé dans le perçage 26 de l'arbre 14. Ce clapet pourrait cependant être disposé dans le perçage 28B de la bague de frottement 28. Le ressort 36 peut être défini de telle sorte que le clapet 30 soit taré à une pression de l'ordre de 3 bar, de sorte qu'il ne s'ouvre que lorsque la pression dans la chambre intermédiaire 24 est supérieure d'au moins 3 bar à la pression dans la conduite 1. Par exemple, le premier élément d'étanchéité 20 peut être conçu pour fuir à partir d'une différence de pression de 1 bar entre la chambre intermédiaire 24 et l'espace intérieur du carter 11.

Dans le cas particulier où l'appareil hydraulique est de type à pistons décrabotables, on peut faire régner une pression de l'ordre de 3 à 5 bar dans l'espace intérieur du carter 11 pour décraboter les pistons, par amenée de fluide par la conduite 3. Dans cette situation d'inactivité de l'appareil hydraulique, et en particulier également pendant le court instant où on passe de la situation désactivée (i.e. lorsque les pistons sont décrabotés et que l'appareil est en roue libre dans le cas d'un moteur hydraulique) à la situation activée (i.e. lorsque les pistons sont crabotés et que l'appareil est à cylindrée non nulle dans le cas d'un moteur hydraulique), alors que la pression dans l'espace intérieur du carter augmente au moment du recrabotage des pistons, le premier élément d'étanchéité 20 fuit de sorte que la pression monte dans la chambre intermédiaire 24. Lorsque cette pression atteint 3 bar, le clapet antiretour 30 s'ouvre pour décharger cette chambre. Si l'appareil est dans une situation désactivée, la conduite 1 est à faible pression. Au moment (qui est un court instant) où on passe de la situation désactivée à la situation activée, la pression d'alimentation s'est établie dans la conduite 2, mais ne s'est pas encore établie dans la conduite 1. Ainsi il est encore possible d'obtenir l'ouverture du clapet antiretour 30, au moment même où les pistons, poussés par la pression établie dans la conduite 1 sortent des cylindres pour entrer en contact avec la came, ce qui crée une diminution du volume contenu dans l'espace intérieur du carter 11, et peut créer un pic de pression temporaire dans ledit espace intérieur. Ainsi, le deuxième élément d'étanchéité 22 est protégé contre les excès de pression et joue pleinement son rôle consistant à assurer l'étanchéité entre l'espace intérieur 11 du carter et les paliers 18A et 18B.

Lorsque l'appareil est en fonctionnement, les pistons étant crabotés, la pression dans la conduite principale 1 est normalement au moins de l'ordre de la pression de gavage. La conduite 1 est de préférence la conduite principale d'échappement, c'est-à-dire qu'elle sert à l'échappement dans le sens de fonctionnement préféré de l'appareil hydraulique (marche avant). La pression dans l'espace intérieur du carter 11 restant par ailleurs faible, en étant en général inférieure à la pression de 3 à 5 bar utilisée pour le décrabotage des pistons, le fluide ne pénètre pas dans la chambre intermédiaire 20 à partir de la conduite 1. On relève d'ailleurs que, lorsque l'appareil hydraulique est en fonctionnement, la conduite 1 peut servir à drainer l'espace intérieur du carter, de sorte que la pression de fluide dans cet espace intérieur est faible. La conduite 1 peut dans ce mode de fonctionnement être raccordée à un réservoir à la pression atmosphérique ou à une pression voisine.

On peut cependant choisir que la conduite 1 qui est reliée à la chambre 24 par la liaison 26, 28 soit la conduite d'alimentation de l'appareil hydraulique auquel cas, lorsque l'appareil hydraulique est de type moteur hydraulique à pistons radiaux, la pression dans cette conduite peut atteindre 450 bar. Ceci étant, comme indiqué ci-dessus, il est avantageux que cette conduite 1 soit la conduite qui, dans le sens préférentiel de fonctionnement de l'appareil, sert à l'échappement. Même s'il s'agit de la conduite d'échappement, la pression dans cette conduite lors du fonctionnement de l'appareil hydraulique est généralement de l'ordre de 20 bar, et reste supérieure à la pression dans l'espace intérieur 11 du carter, de sorte que, même dans ce cas, le fluide ne pénètre pas de la conduite principale vers la chambre intermédiaire 24. Ainsi, lorsque l'appareil hydraulique est à deux sens de fonctionnement, les conduites 1 et 2 jouant alternativement le rôle de conduite principale d'alimentation et de conduite principale d'échappement, la pression dans la chambre intermédiaire reste suffisamment faible pour que le deuxième élément d'étanchéité 22 joue son rôle.

Lorsque l'on active l'appareil hydraulique après une phase de désactivation, on peut commencer par relier la conduite 3 à un réservoir à la pression atmosphérique ou à une pression voisine pour drainer l'espace intérieur du carter et faire diminuer la pression dans cet espace, avant de mettre les conduites 1 et 2 en pression, ceci pour éviter toute surpression dans la chambre 24.

La figure 1 montre la circulation de fluide en situation de fonctionnement de l'appareil, les pistons étant en contact avec la came et l'appareil fonctionnant dans son sens préférentiel. Les flèches en gras dans les conduites 1 et 2 montrent que ces conduites servent respectivement à l'échappement et à l'alimentation, tandis que la conduite 3 sert à réalise un drain du volume interne 11 du carter 12. La chambre intermédiaire 24 est alors isolée des conduites 1 et 2 via le clapet antiretour 30 dans la mesure où la pression au sein des conduites principales 1 et 2 est supérieure à la pression au sein de la chambre intermédiaire 24.

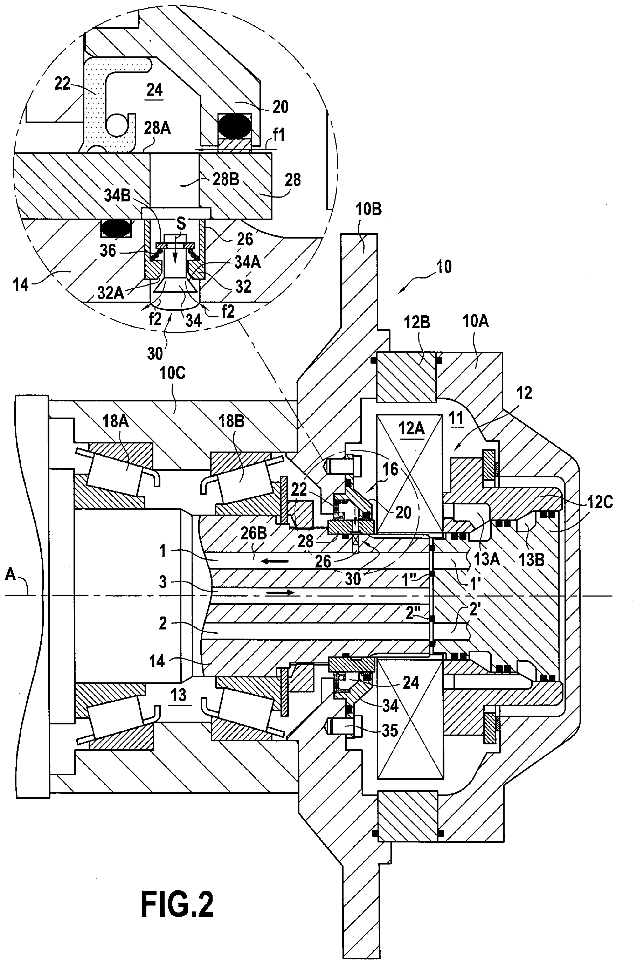

La figure 2 montre la situation alors que les pistons sont décrabotés, c'est-à-dire qu'ils sont rétractés dans les cylindres, sans être en contact avec la came. On voit que la conduite 3 sert alors au maintien en pression de l'espace intérieur du carter 11. Sous l'effet de l'augmentation de cette pression qui se produit lors du recrabotage des pistons (leur sortie pour leur mise en contact avec la came), une fuite peut avoir lieu au niveau du premier élément d'étanchéité, comme indiqué par la flèche f1 dans la partie agrandie de la figure. Dans ce cas, la pression dans la chambre intermédiaire 24 devenant supérieure à la pression dans la conduite 1, la tige de clapet 34 se décolle de son siège est le fluide circule vers la conduite 1, comme indiqué par les flèches f2.

Le système tel que proposé réalise ainsi une circulation spécifique de fluide dans la configuration désactivée, dans laquelle l'une des conduites principales réalise alors une fonction de drain du volume interne du carter via la chambre intermédiaire 24. Une telle circulation spécifique de fluide permet de s'affranchir de la nécessité d'un conduit additionnel.

Plus généralement, on comprend que le système tel que proposé permet de réaliser un pilotage de l'alimentation en pression d'un moteur hydraulique 10 à pistons rétractables, de manière à permettre de réaliser un drain du volume interne 11 du carter 12 lorsque le moteur hydraulique 10 est en configuration désactivée sans nécessiter la réalisation d'une conduite additionnelle de drain dans l'arbre, le drain étant ici réalisé via l'une des conduites d'alimentation ou d'échappement du moteur hydraulique 10.

Le système représenté sur la figure 3 est analogue à celui des figures 1 et 2, à ceci près que le premier élément d'étanchéité 22 comprend un gicleur calibré 21 qui organise une fuite permanente entre l'espace intérieur du carter et la chambre intermédiaire 24.Le système selon l'invention fonctionne en combinaison avec un système d'alimentation/échappement utilisant les trois conduites 1, 2 et 3 de manière particulière : dans le mode activé, les conduites 1 et 2 sont les conduites principales d'échappement et d'alimentation de l'appareil hydraulique, tandis que la conduite 3 est une conduite de drainage reliée à un réservoir à la pression atmosphérique ou à une pression voisine; en revanche, dans un mode désactivé, les conduites 1 et 2 sont reliées à un réservoir à la pression atmosphérique ou à une pression voisine, tandis que la conduite 3 est reliée à une pression de décrabotage de l'ordre de 3 à 5 bar dans l'espace intérieur du carter 11 pour décraboter les pistons, par amenée de fluide par la conduite 3. Pendant le crabotage des pistons, c'est-à-dire pendant le court instant où la conduite d'alimentation 1 monte en pression et où les pistons sortent des cylindres pour venir en contact avec la came, le pic de pression de carter peut être évacué vers la conduite 1 qui ne monte pas à une pression importante, tant que tous les pistons ne sont pas sortis et en appui sur la came 12B.

En mode non activé, les pistons étant décrabotés, la faible pression permanente qui règne dans le carter 11 crée une fuite soit par au niveau du premier élément d'étanchéité 20, soit par le gicleur calibré 21 (figure 3). Cette fuite s'évacue via la chambre 24 vers la conduite 1. Le fait que la conduite 1 ne soit pas mise en pression dans ce mode de fonctionnement permet d'évacuer ce débit sans ajouter de conduite de drain supplémentaire dans l'arbre, et ainsi évite de fragiliser l'arbre. Cette fuite permet un balayage de l'huile contenue dans le carter et dans le dispositif d'étanchéité 16. Ce balayage permet le rinçage et le refroidissement des composants hydrauliques et du dispositif d'étanchéité 16. Ce balayage est utile lorsque le système est désactivé et que l'arbre tournent à grande vitesse, ou que la proximité d'un organe extérieur tel qu'un frein envoie un flux de chaleur sur le système. C'est en particulier le cas lorsque l'appareil hydraulique est un moteur hydraulique d'assistance pour entraîner une roue d'un véhicule, ce moteur étant actif en situation de travail et étant inactif en situation de circulation sur route.

La pression de décrabotage peut être utilisée par sécurité en parallèle d'autres moyens de rappel des pistons en mode décraboté, tels que ressorts de rappel ou des aimants.

Il convient de relever que les valves nécessaires pour relier les différentes conduites à l'alimentation hydraulique de puissance ne sont pas représentées sur les figures qui viennent d'être décrites.

## Revendications

1. Système hydraulique comprenant un carter (10) dans lequel est disposé un moteur hydraulique (12) comprenant un bloc-cylindres (12A) comprenant une pluralité de cylindre chacun muni de pistons, une came (12B) multilobes et un distributeur de fluide (12C), l'appareil hydraulique (12) étant configuré de manière à alterner entre une configuration activée dans laquelle les pistons sont au contact de la came (12B), et une configuration désactivée dans laquelle les pistons ne sont pas au contact de la came (12B), le système hydraulique comprenant des conduites principales (1, 2) pour l'alimentation et l'échappement du moteur hydraulique (12) en configuration activée, un arbre (14) engagé dans le carter, et un dispositif d'étanchéité (16) entre l'arbre et le carter, le dispositif d'étanchéité (16) comprenant un premier et un deuxième élément d'étanchéité (20, 22) successivement disposés sur l'arbre en ménageant entre eux une chambre intermédiaire (24),
**caractérisé en ce qu'**il présente une liaison (26, 28B) entre la chambre intermédiaire (24) et l'une (1) des conduites principales, cette liaison étant équipée d'un clapet antiretour (30) autorisant seulement la circulation de fluide dans le sens allant de la chambre intermédiaire (24) vers ladite une des conduites principales (1).

2. Système selon la revendication 1, **caractérisé en ce que** l'arbre (14) présente seulement trois tronçons axiaux de conduites de fluide, à savoir deux tronçons principaux (1, 2) formant respectivement au moins une partie de la conduite principale d'alimentation et au moins une partie de la conduite principale d'échappement, et un tronçon auxiliaire (3) formant au moins une partie d'une conduite auxiliaire pour sélectivement alimenter l'espace intérieur du carter en fluide sous pression ou former un drain de l'espace intérieur du carter.

3. Système selon la revendication 2, configuré de manière à présenter deux modes de fonctionnement :
- une configuration active, dans laquelle les pistons du moteur hydraulique (12) sont au contact de la came (12B),
une configuration désactivée dans laquelle les pistons du moteur hydraulique (12) ne sont pas au contact de la came (12B), ledit système étant configuré de manière à ce que
en configuration active, les conduites principales de fluide réalisent l'alimentation et l'échappement de fluide du moteur hydraulique et la conduite auxiliaire forme un drain du carter (10), et
en configuration désactivée, la conduite auxiliaire réalise une mise en pression du volume interne du carter (10), et l'une des conduites principales de fluide forme un drain de la chambre intermédiaire (24).

4. Système selon l'une des revendications 1 à 3, dans lequel ladite au moins une des conduites principales (1,2), optionnellement chacune des deux conduites principales, comprend un tronçon qui passe dans l'arbre (14), et la liaison comprend un perçage (26) de l'arbre (14) qui s'étend entre la chambre intermédiaire (24) et ledit tronçon (1).

5. Système selon la revendication 4, dans lequel le perçage (26) de l'arbre (14) est orienté radialement.

6. Système selon l'une des revendications 1 à 5, dans lequel le clapet antiretour (30) est disposé dans le perçage (26) de l'arbre (14).

7. Système selon l'une quelconque des revendications 1 à 6, comportant une bague de frottement (28) montée serrée sur l'arbre et présentant une piste externe avec laquelle coopère au moins l'un des éléments d'étanchéité (20, 22), et en ce que la liaison comprend un perçage (28B) de la bague de frottement (28).

8. Système selon la revendication 7, prise en combinaison avec l'une quelconque des revendications 1 à 5, dans lequel le clapet antiretour (30) est disposé dans le perçage de la bague de frottement (28).

9. Système selon l'une quelconque des revendications 1 à 8, dans lequel ladite une (1) des conduites principales est la conduite d'échappement de l'appareil hydraulique (12) dans le sens préférentiel de fonctionnement dudit appareil.

10. Système selon l'une quelconque des revendications 1 à 9, dans lequel le clapet antiretour (30) est un clapet taré à une pression de tarage qui est avantageusement de l'ordre de 3 bar.

11. Système selon l'une quelconque des revendications 1 à 10, **caractérisé en ce qu'**il forme un système d'entrainement d'une roue d'un véhicule et **en ce que** l'arbre (14) forme la fusée de la roue.

12. Système selon l'une quelconque des revendications 1 à 11, dans lequel le premier élément d'étanchéité (20) est pourvu d'un gicleur calibré (21) permettant un balayage de l'espace intérieur du carter (11).

13. Procédé de pilotage d'alimentation en fluide d'un moteur hydraulique (12) à pistons radiaux disposé dans le volume interne (11) d'un carter (12), ledit moteur hydraulique (12) étant relié à deux conduites principales, et le volume interne du carter étant relié à une conduite auxiliaire, le moteur hydraulique (12) comprenant une pluralité de pistons disposés dans des cylindres d'un bloc cylindres (12A) et adaptés pour sélectivement venir au contact d'une came (12B), la came (12B) étant du type multilobes et le moteur hydraulique (12) comprenant un distributeur de fluide (12C), un arbre (14) engagé dans le carter, et un dispositif d'étanchéité (16) entre l'arbre et le carter, le dispositif d'étanchéité (16) comprenant un premier et un deuxième élément d'étanchéité (20, 22) successivement disposés sur l'arbre en ménageant entre eux une chambre intermédiaire (24), le moteur hydraulique (12) comprenant une liaison (26, 28B) entre la chambre intermédiaire (24) et l'une (1) des conduites principales, cette liaison étant équipée d'un clapet antiretour (30) autorisant seulement la circulation de fluide dans le sens allant de la chambre intermédiaire (24) vers ladite une des conduites principales (1), ledit procédé pilotant l'alimentation en fluide de manière à ce que
- dans une configuration activée, les conduites principales (1, 2) forment l'alimentation et l'échappement en fluide du moteur hydraulique (12), et la conduite auxiliaire forme un drain de fluide du volume interne (11) du carter (12),
- dans une configuration désactivée, la conduite auxiliaire est alimentée en fluide de manière à appliquer une pression au sein du volume interne (11) du carter (12) de manière à maintenir les pistons en position rétractée dans les cylindres, et les deux conduites principales (1, 2) sont à pression ambiante, l'une desdites conduites principales formant un drain du volume interne (11) du carter (12).

## Patentansprüche

1. Hydrauliksystem, umfassend ein Gehäuse (10), in dem ein Hydraulikmotor (12) angeordnet ist, der einen Zylinderblock (12A) mit einer Vielzahl von Zylindern, die jeweils mit Kolben ausgestattet sind, einen mehrlappigen Nocken (12B) sowie einen Fluidverteiler (12C) umfasst, wobei das Hydraulikgerät (12) dazu ausgelegt ist, zwischen einer aktivierten Konfiguration, bei der die Kolben mit dem Nocken (12B) in Kontakt stehen, und einer deaktivierten Konfiguration, bei der die Kolben nicht mit dem Nocken (12B) in Kontakt stehen, abzuwechseln, wobei das Hydrauliksystem Hauptleitungen (1, 2) zur Versorgung des und zum Abführen von dem Hydraulikmotor(s) (12) in aktivierter Konfiguration, eine in das Gehäuse eingreifende Welle (14) und eine Dichtungsvorrichtung (16) zwischen der Welle und dem Gehäuse umfasst, wobei die Dichtungsvorrichtung (16) ein erstes und ein zweites Dichtungselement (20, 22) umfasst, die unter Aussparen einer Zwischenkammer (24) zwischen ihnen nacheinander auf der Welle angeordnet sind,
**dadurch gekennzeichnet, dass** es eine Verbindung (26, 28B) zwischen der Zwischenkammer (24) und einer (1) der Hauptleitungen aufweist, wobei diese Verbindung mit einem Rückschlagventil (30) ausgestattet ist, das nur das Zirkulieren von Fluid in der von der Zwischenkammer (24) zu der einen der Hauptleitungen (1) gehenden Richtung zulässt.

2. System nach Anspruch 1, **dadurch gekennzeichnet, dass** die Welle (14) nur drei axiale Abschnitte von Fluidleitungen aufweist, nämlich zwei Hauptabschnitte (1, 2), die jeweils wenigstens einen Teil der Versorgungshauptleitung und wenigstens einen Teil der Abführhauptleitung bilden, sowie einen Hilfsabschnitt (3), der wenigstens einen Teil einer Hilfsleitung bildet, um selektiv den Innenraum des Gehäuses mit unter Druck stehendem Fluid zu versorgen oder einen Abfluss des Innenraums des Gehäuses zu bilden.

3. System nach Anspruch 2, das dazu ausgelegt ist, zwei Betriebsarten aufzuweisen:
- eine aktive Konfiguration, bei der die Kolben des Hydraulikmotors (12) mit dem Nocken (12B) in Kontakt stehen,
- eine deaktivierte Konfiguration, bei der die Kolben des Hydraulikmotors (12) nicht mit dem Nocken (12B) in Kontakt stehen, wobei das System derart ausgelegt ist, dass
in der aktiven Konfiguration die Fluidhauptleitungen das Zuführen und Abführen von Fluid zu/von dem Hydraulikmotor vollziehen und die Hilfsleitung einen Abfluss des Gehäuses (10) bildet, und
in der deaktivierten Konfiguration die Hilfsleitung ein Druckbeaufschlagen des Innenraums des Gehäuses (10) vollzieht und eine der Fluidhauptleitungen einen Abfluss der Zwischenkammer (24) bildet.

4. System nach einem der Ansprüche 1 bis 3, bei dem die wenigstens eine der Hauptleitungen (1, 2), optional eine jede der beiden Hauptleitungen, einen Abschnitt umfasst, der in der Welle (14) verläuft, und die Verbindung eine Bohrung (26) der Welle (14) umfasst, die sich zwischen der Zwischenkammer (24) und dem Abschnitt (1) erstreckt.

5. System nach Anspruch 4, bei dem die Bohrung (26) der Welle (14) radial ausgerichtet ist.

6. System nach einem der Ansprüche 1 bis 5, bei dem das Rückschlagventil (30) in der Bohrung (26) der Welle (14) angeordnet ist.

7. System nach einem der Ansprüche 1 bis 6, umfassend einen Reibungsring (28), der auf der Welle straff angebracht ist und eine äußere Spur aufweist, mit der wenigstens eines der Dichtungselemente (20, 22) zusammenarbeitet, und dass die Verbindung eine Bohrung (28B) des Reibungsrings (28) umfasst.

8. System nach Anspruch 7 in Kombination mit einem der Ansprüche 1 bis 5, bei dem das Rückschlagventil (30) in der Bohrung des Reibungsrings (28) angeordnet ist.

9. System nach einem der Ansprüche 1 bis 8, bei dem die eine (1) der Hauptleitungen die Abführleitung des Hydraulikgerätes (12) in der bevorzugten Betriebsrichtung des Gerätes ist.

10. System nach einem der Ansprüche 1 bis 9, bei dem das Rückschlagventil (30) ein Ventil ist, das auf einen Einstelldruck eingestellt ist, der vorteilhafterweise in der Größenordnung von 3 bar liegt.

11. System nach einem der Ansprüche 1 bis 10, **dadurch gekennzeichnet, dass** es ein System zum Antreiben eines Rades eines Fahrzeugs bildet und dass die Welle (14) den Zapfen des Rades bildet.

12. System nach einem der Ansprüche 1 bis 11, bei dem das erste Dichtungselement (20) mit einer kalibrierten Düse (21) versehen ist, die ein Spülen des Innenraums des Gehäuses (11) ermöglicht.

13. Verfahren zum Steuern der Zufuhr von Fluid zu einem Hydraulikmotor (12) mit Radialkolben, der in dem Innenraum (11) eines Gehäuses (12) angeordnet ist, wobei der Hydraulikmotor (12) mit zwei Hauptleitungen verbunden ist, und wobei der Innenraum des Gehäuses mit einer Hilfsleitung verbunden ist, wobei der Hydraulikmotor (12) eine Vielzahl von Kolben umfasst, die in Zylindern eines Zylinderblocks (12A) angeordnet sind und dazu ausgelegt sind, selektiv mit einem Nocken (12B) in Kontakt zu kommen, wobei der Nocken (12B) vom mehrlappigen Typ ist und der Hydraulikmotor (12) einen Fluidverteiler (12C), eine in das Gehäuse eingreifende Welle (14) und eine Dichtungsvorrichtung (16) zwischen der Welle und dem Gehäuse umfasst, wobei die Dichtungsvorrichtung (16) ein erstes und ein zweites Dichtungselement (20, 22) umfasst, die unter Aussparen einer Zwischenkammer (24) zwischen ihnen nacheinander auf der Welle angeordnet sind, wobei der Hydraulikmotor (12) eine Verbindung (26, 28B) zwischen der Zwischenkammer (24) und einer (1) der Hauptleitungen umfasst, wobei diese Verbindung mit einem Rückschlagventil (30) ausgestattet ist, das nur das Zirkulieren von Fluid in der von der Zwischenkammer (24) zu der einen der Hauptleitungen (1) gehenden Richtung zulässt, wobei das Verfahren die Fluidzufuhr derart steuert, dass
- in einer aktivierten Konfiguration die Hauptleitungen (1, 2) die Fluidzufuhr und - abfuhr des Hydraulikmotors bilden und die Hilfsleitung einen Fluidabfluss des Innenraums (11) des Gehäuses (10) bildet,
- in einer deaktivierten Konfiguration die Hilfsleitung derart mit Fluid beaufschlagt wird, dass ein Druck innerhalb des Innenraums (11) des Gehäuses (10) angelegt wird, so dass die Kolben in der eingefahrenen Position in den Zylindern gehalten werden, und die beiden Hauptleitungen (1, 2) auf Umgebungsdruck sind, wobei eine der Hauptleitungen einen Abfluss des Innenraums (11) des Gehäuses (10) bildet.

## Claims

1. A hydraulic system comprising a casing (10) wherein a hydraulic engine (12) is disposed comprising a cylinder block (12A) comprising a plurality of cylinders each provided with pistons, a multilobe cam (12B) and a fluid distributor (12C), the hydraulic apparatus (12) being configured so as to alternate between an activated configuration in which the pistons are in contact with the cam (12B), and a deactivated configuration in which the pistons are not in contact with the cam (12B), the hydraulic system comprising main lines (1, 2) for the supply and discharge of the hydraulic engine (12) in activated configuration, a shaft (14) engaged in the casing, and a sealing device (16) between the shaft and the casing, the sealing device (16) comprising a first and a second sealing element (20, 22) successively disposed on the shaft by arranging an intermediate chamber (24) therebetween,
**characterized in that** it has a connection (26, 28B) between the intermediate chamber (24) and one (1) of the main lines, this connection being equipped with a check valve (30) allowing only the circulation of fluid in the direction from the intermediate chamber (24) to said one of the main lines (1).

2. The system according to claim 1, **characterized in that** the shaft (14) has only three axial sections of fluid lines, namely two main sections (1, 2) respectively forming at least one portion of the main supply line and at least one portion of the main discharge line, and an auxiliary section (3) forming at least one portion of an auxiliary line to selectively supply the internal space of the casing with pressurized fluid or form a drain of the internal space of the casing.

3. The system according to claim 2, configured so as to present two operating modes:
- an active configuration, in which the pistons of the hydraulic engine (12) are in contact with the cam (12B),
- a deactivated configuration in which the pistons of the hydraulic engine (12) are not in contact with the cam (12B), said system being configured such that
in the active configuration, the main fluid lines carry out the fluid supply and discharge of the hydraulic engine and the auxiliary line forms a drain of the casing (10), and
in the deactivated configuration, the auxiliary line performs a pressurization of the inner volume of the casing (10), and one of the main fluid lines forms a drain of the intermediate chamber (24).

4. The system according to any of claims 1 to 3, wherein said at least one of the main lines (1,2), optionally each of the two main lines, comprises a section which passes through the shaft (14), and the connection comprises a drilling (26) of the shaft (14) which extends between the intermediate chamber (24) and said section (1).

5. The system according to claim 4, wherein the drilling (26) of the shaft (14) is oriented radially.

6. The system according to any of claims 1 to 5, wherein the check valve (30) is disposed in the drilling (26) of the shaft (14).

7. The system according to any one of claims 1 to 6, including a friction ring (28) tightly mounted on the shaft and having an outer track with which at least one of the sealing elements (20, 22) cooperates, and in that the connection comprises a drilling (28B) of the friction ring (28).

8. The system according to claim 7, taken in combination with any one of claims 1 to 5, wherein the check valve (30) is disposed in the drilling of the friction ring (28).

9. The system according to any one of claims 1 to 8, wherein said one (1) of the main lines is the discharge line of the hydraulic apparatus (12) in the preferred direction of operation of said apparatus.

10. The system according to any one of claims 1 to 9, wherein the check valve (30) is a valve calibrated at a set pressure which is advantageously on the order of 3 bars.

11. The system according to any one of claims 1 to 10, **characterized in that** it forms a system for driving a wheel of a vehicle and **in that** the shaft (14) forms the spindle of the wheel.

12. The system according to any one of claims 1 to 11, wherein the first sealing element (20) is provided with a calibrated nozzle (21) allowing a scanning of the internal space of the casing (11).

13. A method for controlling the fluid supply of a hydraulic radial-piston engine (12) disposed in the inner volume (11) of a casing (12), said hydraulic engine (12) being connected to two main lines, and the inner volume of the casing being connected to an auxiliary line, the hydraulic engine (12) comprising a plurality of pistons disposed in cylinders of a cylinder block (12A) and adapted to selectively come into contact with a cam (12B), the cam (12B) being of the multilobe type and the hydraulic engine (12) comprising a fluid distributor (12C), a shaft (14) engaged in the casing, and a sealing device (16) between the shaft and the casing, the sealing device (16) comprising a first and a second sealing element (20, 22) successively disposed on the shaft by arranging an intermediate chamber (24) therebetween, the hydraulic engine (12) comprising a connection (26, 28B) between the intermediate chamber (24) and one (1) of the main lines, this connection being equipped with a check valve (30) allowing only the circulation of fluid in the direction from the intermediate chamber (24) to said one main lines (1), said method controlling the fluid supply such that
- in an activated configuration, the main lines (1, 2) form the fluid supply and discharge of the hydraulic engine (12), and the auxiliary line forms a fluid drain of the inner volume (11) of the casing (12),
- in a deactivated configuration, the auxiliary line is supplied with fluid so as to apply a pressure within the inner volume (11) of the casing (12) so as to hold the pistons in the retracted position in the cylinders, and the two main lines (1, 2) are under ambient pressure, one of said main lines forming a drain of the inner volume (11) of the casing (12).
